# EUROPEAN PATENT SPECIFICATION

(11) **EP 0 356 938 B1**
(45) Date of publication and mention of the grant of the patent: **03.11.1993**
(21) Application number: 89115723.2
(22) Date of filing: 25.08.1989
(51) Int. Cl.: G11B 20/10, G11B 5/008, G11B 20/18

(54) **Rotary head assembly for substantially concurrent recording and monitoring of data on a magnetic tape cassette or the like**
Rotierende Kopfanordnung zur gleichzeitigen Aufzeichnung und Überwachung von Daten auf einer magnetischen Bandkassette oder dergleichen
Assemblage de tête rotative d'enregistrement et de surveillance simultanée de données sur une cassette à bande magnétique ou similaires

(30) Priority: 01.09.1988 JP 220015/88
(43) Date of publication of application: 07.03.1990
(73) Proprietor: SHARP KABUSHIKI KAISHA, Osaka 545 (JP); TEAC CORPORATION, Musashino-shi Tokyo (JP)
(72) Inventor: Deguchi, Masato, Kamo-gun Hiroshima-ken (JP); Hamada, Toshihiko, Kodaira-shi Tokyo (JP)
(74) Representative: Vogeser, Werner, Dipl.-Ing.

(56) References cited:
- FR-A- 2 536 619
- GB-A- 2 173 341
- US-A- 4 669 002

## Description

### BACKGROUND OF THE INVENTION

Our invention relates generally to magnetic tape apparatus, and particularly to that of the type having a rotary head assembly for reading, writing, and monitoring data on magnetic tape. More particularly, our invention pertains to the improved arrangement of read/write heads and monitor heads included in the rotary head assembly. Typically, the apparatus according to our invention represents an adaptation of a digital audio tape (DAT) deck for the storage and retrieval of non-audio data on the DAT, with a read-after-write monitoring capability, for use as an external storage device of a computer.

Japanese Unexamined Patent Publication No. 62-177701, laid open to public inspection on August 4, 1987, represents an example of known rotary-head magnetic read/write system providing for substantially concurrent recording and monitoring of digital data on a DAT cassette. It teaches the use of a rotary head assembly including a rotary drum to which there are mounted a pair of read/write heads and a pair of monitor heads. The pair of read/write heads are disposed in diametrically opposite positions on the rotary drum. The pair of monitor heads are also disposed in diametrically opposite positions on the drum. An angular difference of 90 degrees exists between the positions of the two pairs of heads. The magnetic tape is wrapped around the rotary head assembly through an angle of, typically, 90 degrees.

In this prior art system, as the read/write heads create a series of slanting records tracks on the tape, the monitor heads substantially concurrently scan the tracks for monitoring the recorded data. In event the output signals of the monitoring heads indicate that data is not being recorded properly, the host computer commands the rewriting of the data.

There has been a problem left unsolved in connection with such a rotary-head DAT (R-DAT) system having a substantially concurrent monitoring capability. In R-DAT systems in general, the pair of read/write heads alternately form tracks so as to overlap the preceding track. Such "overwriting" results in the creation of record tracks of reduced width. However, since the monitor heads scan the tracks before they are overwritten, the records tracks eventually formed by overwriting are narrower than those scanned by the monitor heads.

Admittedly, the prior art R-DAT system enables the evaluation of the quality of the recording on the tracks before overwriting. The monitor heads have so far been so arranged on the rotary drum as to scan the complete width of the tracks as formed by the read/write heads. For this same reason, however, the prior art system has often failed to ascertain whether the data stored on the overwritten tracks with a sufficient quality margin or not. Data errors on the overwritten tracks present little or no serious problem as long as the DAT deck is used for recording digitized audio signals. The audio DAT deck is usually equipped to correct such errors during the process of playback to such an extent that the reproduced sound will be practically free from audible distortions. However, recording errors can bring about serious consequences in the use of the DAT deck as an external storage device of computers.

### SUMMARY OF THE INVENTION

We have hereby invented how to accurately detect possible errors in data recorded on the overwritten tracks on a DAT cassette or the like, instead of on the tracks before they are overwritten.

Briefly, our invention as defined in appended claim 1 may be summarized as a magnetic tape apparatus of the type having a rotary head assembly for the storage and retrieval of digital data on and from a series of slanting record tracks on magnetic tape such as that in the form of a cassette. More specifically, our invention concerns the novel configuration of the rotary head assembly. The rotary head assembly comprises first and second primary heads (e.g. read/write heads) mounted to a rotary drum for at least writing data on the magnetic tape. The first and second primary heads alternately scan the magnetic tape for creating a series of slanting record tracks thereon, with each primary head overwriting the preceding record track formed by the other primary head. Also mounted to the rotary drum are first and second secondary heads (e.g. monitor heads) for at least monitoring the data written on the magnetic tape by the first and second read/write heads, respectively. The first secondary head is displaced from the first primary head both angularly and axially on the rotary drum to such extents as to scna each record track that has been created by the first primary head and which has been overwritten by the second primary head. The second secondary head is displaced from the second primary head both angularly and axially on the rotary drum to such extents as to scan each records rack that has been created by the second primary head and which has been overwritten by the first primary head.

It is thus seen that the output signals of the two secondary heads lend themselves to the more accurate monitoring of the recording on the overwritten tracks.

As an additional advantage, the two secondary heads can be positioned in centerline alignment with the overwritten tracks. These secondary heads can therefore be utilized for accurate tracking control of the primary heads.

The above and other features and advantages of our invention and the manner of realizing them will become more apparent, and the invention itself will best be understood, from a study of the following description and appended claims, with reference had to the attached drawings showing some preferred embodiments of our invention.

### BRIEF DESCRIPTION OF THE DRAWINGS

FIG. 1 is a schematic diagram, partly in block form, of the R-DAT system embodying the principles of our invention;
FIG. 2 is a diagrammatic illustration explanatory of the positional relationship between the rotary head assembly and the magnetic tape traveling past the same in the R-DAT system of FIG. 1;
FIG. 3 is a developed view explanatory of the angular and axial positions of the read/write heads and monitor heads on the rotary drum in the rotary head assembly of FIG. 2;
FIG. 4 is a schematic illustration of how the read/write heads and monitor heads scan the magnetic tape;
FIG. 5 is a partial diagrammatic illustration of the magnetic tape and the slanting record tracks formed thereon;
FIG. 6 is a partial schematic illustration explanatory of how the overwritten record tracks are created by the two read/write heads and how they are scanned by the two monitor heads;
FIG. 7 is a schematic illustration of a recording format of the R-DAT system;
FIG. 8 is a schematic illustration of how of the monitor heads read the tracking data on the magnetic tape; and
FIG. 9 is a block diagram of the read/write circuit of the R-DAT system.

### DESCRIPTION OF THE PREFERRED EMBODIMENT

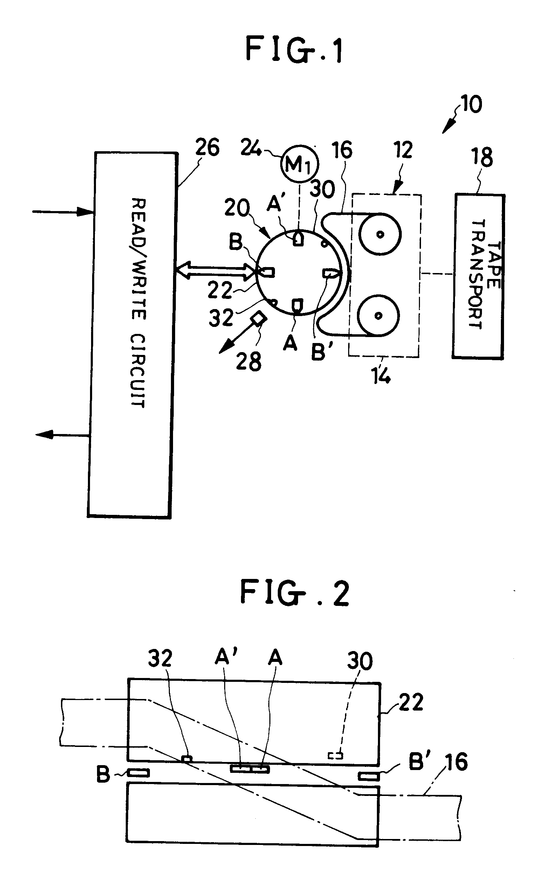

We will now describe our invention in detail as embodied in an R-DAT deck adapted for use as an external storage device of a computer. As diagrammatically illustrated in FIG. 1, theR-DAT deck 10 embodying our invention is for use with a replaceable DAT cassette 12 of standard construction having a generally flat, boxlike housing 14 with a length of magnetic tape 16 received therein. The R-DAT deck 10 is equipped with a tape transport 18 for transporting the tape 16 from hub to hub within the cassette housing 14. We have shown the tape transport 18 in the form of a block because it can be of any known or suitable construction. Typically, the tape transport 18 comprises a capstan, a capstan motor, a pinch roller, and a pair of hub motors, which are all familiar to the specialists.

Disposed for data transfer contact with the magnetic tape 16 of the DAT cassette 12 is a rotary head assembly 20 forming the gist of our invention. The rotary head assembly 20 comprises a rotary drum 22 to which there are mounted first *A* and second *A*' magnetic read/write heads and first *B* and second *B*' magnetic monitor heads. We have called the read-write heads *A* and *A*′ so in conformity with conventional terminology. According to our invention, however, the read/write heads are required only to write data on the DAT cassette 12, the reading of the data being possible by the monitor heads *B* and *B*', even though the read/write heads may be utilized for reading too. We will therefore refer to the first and second read/write heads *A* and *A*′ as the first and second primary heads, and to the first and second monitor heads *B* and *B*′ as the first and second secondary heads, respectively, as these terms more aptly describe the heads taken in their broader aspects.

The two primary heads *A* and *A*′ are angularly spaced 180 degrees from each other about the axis of the rotary drum 22, and so are the two secondary heads *B* and *B*'. An angular difference of from about 88°50' to about 90°00' exists between the positions of the primary heads *A* and *A*′ and the secondary heads *B* and *B*′. An electric drum motor 24 is drivingly coupled to the rotary drum 22 for imparting rotation thereto.

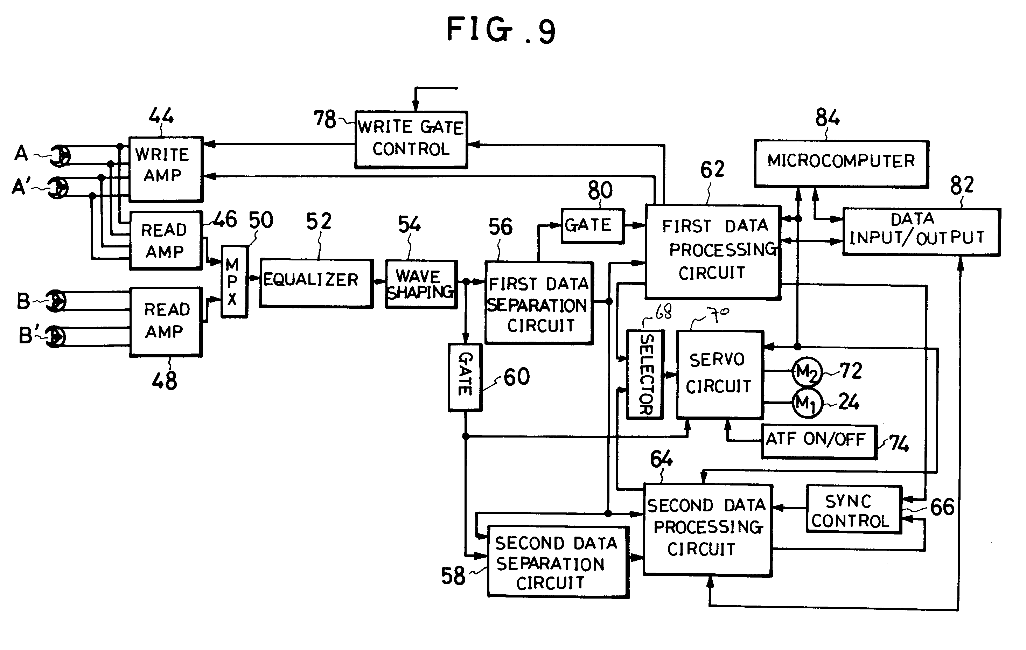

A read/write circuit 26 is electrically connected to the primary heads *A* and *A*′ and secondary heads *B* and *B*′. This read/write circuit is conventionally under the control of a host computer. We will later detail the construction and operation of the read/write circuit 26 with reference to FIG. 9.

FIG. 2 is explanatory of the positions of the four heads *A*, *A*′, *B* and *B*′ on the rotary drum 22 with respect to the magnetic tape 16. The secondary heads *B* and *B*′ scan the record tracks created by the primary heads *A* and *A*′, respectively, after the tracks have been overwritten, instead of just as the tracks are formed by the primary heads. Thus a prescribed difference exists between the axial positions of the primary heads *A* and *A*′ and those of the secondary heads *B* and *B*′ on the rotary drum 22.

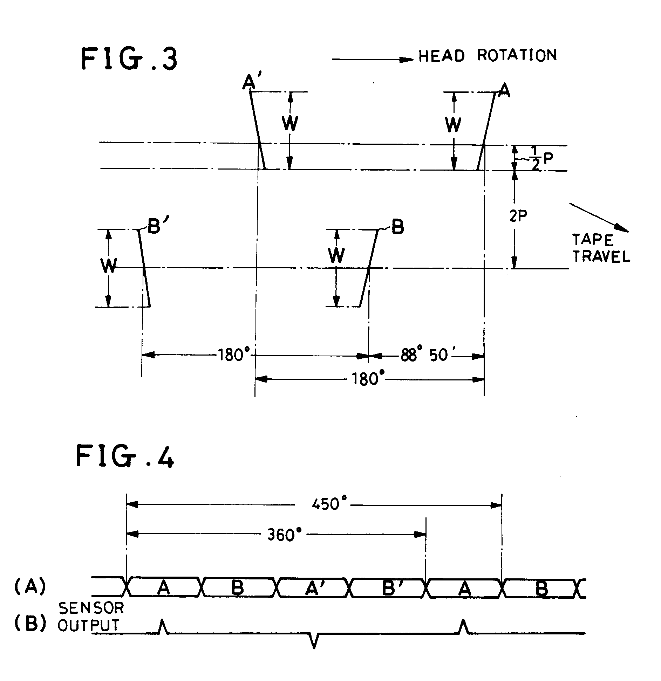

FIG. 3 is explanatory of the axial positions of the four heads *A*, *A*′, *B* and *B*′ on the rotary drum 22 and of the azimuths of the gaps in their cores. We have indicated the four heads by the thicker lines in this figure, and the azimuths of the heads by the inclinations of the thicker lines. It will therefore be understood that the two primary heads *A* and *A*′ have opposite azimuths, and so do the two secondary heads *B* and *B*′. The first primary head *A* and the first secondary head *B* have the same azimuth, and so do the second primary head *A*′ and the second secondary head *B*′.

It will also be noted from FIG. 3 that the four heads *A*, *A*′, *B* and *B*′ have the same track width *W* of, say, 22.0 micrometers. Of course, the pitch or width *P* of the overwritten tracks is less than the track width *W*, being normally 13.6 micrometers. Preferably, the track width *W* should be less than twice the overwritten track pitch *P*. The centers of the secondary heads *B* and *B*′ are spaced twice the overwritten track pitch *P* from the bottom extremities, as viewed in FIG. 3, of the primary heads *A* and *A*′ in the axial direction of the rotary drum 22.

Partly pulled out of the cassette housing 14, the magnetic tape 16 is wrapped around the rotary head assembly 20 through an angle of approximately 90 degrees. During each complete revolution of the rotary drum 22 the four magnetic heads thereon scan the tape each through an angle of 90 degrees in the sequence of first primary head *A*, first secondary head *B* , second primary head *A*′ and second secondary head *B*′, as depicted at (A) in FIG. 4.

Shown at (B) in FIG. 4 is the output signal of a head position sensor seen at 28 in FIG. 1. The head position sensor 28 takes the form of a Hall effect element in this particular embodiment. The Hall effect element 28 is disposed adjacent the path of a north-seeking magnetic pole 30 and a south-seeking magnetic pole 32 which are disposed in diametrically opposite positions on the rotary drum 22. Therefore, with the rotation of the rotary drum 22, the Hall effect element 28 generates an alternate series of positive and negative pulses indicative of the angular positions of the magnetic poles 30 and 32 on the drum and, consequently, of the four magnetic heads thereon.

What must be pointed out in connection with FIG. 4 is that the arrangement of the four magnetic heads on the rotary drum 22 is such that each of the primary heads *A* and *A*′ overwrites the record tracks formed by the other primary head, and that the secondary heads *B* and *B*′ scan the tracks created by the primary heads *A* and *A*′, respectively, after they have been overwritten. The first secondary head *B* starts reading each track created by the first primary head *A* when the rotary drum 22 rotates 450 degrees after the first primary head starts writing the track. Similarly, the second secondary head *B*′ starts reading each track created by the second primary head *A*′ when the rotary drum 22 rotates 450 degrees after the second primary head starts writing the track. Since the tracks formed by the primary heads have been overwritten by the time the rotary drum rotates 450 degrees, the secondary heads scan such overwritten tracks.

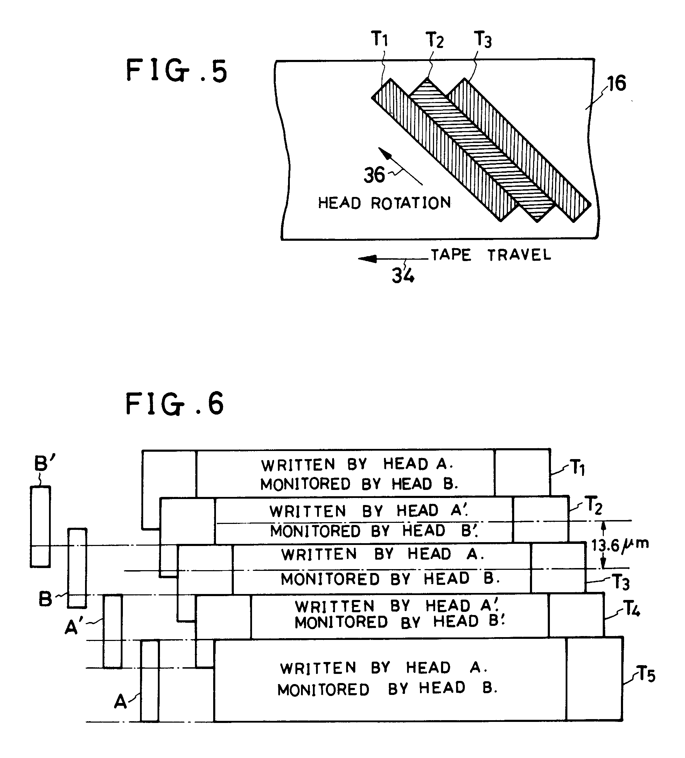

FIG. 5 is an illustration of a series of slanting record tracks *T*₁, *T*₂, *T*₃,... formed on the magnetic tape 16 by the two primary heads *A* and *A*′. The first primary head *A* creates, for example, the record tracks *T*₁, *T*₃, etc., and the second primary head *A*′ creates the record track *T*₂, etc., as the magnetic tape 16, conventionally wrapped around the rotary drum 22, travels in the direction of the arrow 34 and as the primary heads *A* and *A*′ revolve in the direction of the arrow 36. All the record tracks are disposed contiguously by overwriting, but there is no fear of crosstalk because of the different azimuths of the two primary heads *A* and *A*′.

With the slanting tracks of FIG. 5 in mind, let us more closely study the relationship between the tracks and the four heads *A*, *A*′, *B* and *B*′ of the rotary head assembly 20. As schematically illustrated in FIG. 6, the first secondary head *B* is so positioned on the rotary drum 22 as to be in centerline alignment with the successive overwritten tracks *T*₁, *T*₃, etc., created by the first primary head *A*. The second secondary head *B*′ is so positioned on the rotary drum as to be in centerline alignment with the successive overwritten tracks *T*₂, *T*₄, etc., created by the second primary head *A*′. The track *T*₅ in FIG. 6 is created by the first primary head *A* but is not yet overwritten. Thus the first and second secondary heads *B* and *B*′ monitor the data on the overwritten tracks formed by the first and second primary heads *A* and *A*′ respectively.

The above relative arrangement of the primary heads *A* and *A*′ and secondary heads *B* and *B*′ gains the additional advantage that, in rewriting data on the magnetic tape 16, the primary heads can be positioned on desired tracks through tracking control of the secondary heads. Suppose for example that the data on the track *T*₃ in FIG. 6 is to be rewritten. The first primary head *A* will be correctly positioned on the track *T*₃ as the first secondary head *B* is positioned in centerline alignment with the track *T*₁. The subsequent rewriting on the track *T*₃ will result in the destruction of the data on the track *T*₄. It is therefore desirable that the following tracks *T*₄, *T*₅, etc., be rewritten successively. Usually, data is recorded in the form of discrete blocks, with intervening unrecorded regions referred to as gaps, and is rewritten block by block.

As will be understood from an inspection of FIG. 6, the primary heads *A* and *A*′ cannot be positioned in centerline alignment with the overwritten tracks but the secondary heads *B* and *B*′ can be. Accordingly, the primary heads can be placed in position on the desired overwritten tracks for correct rewriting of data through tracking control of the secondary heads.

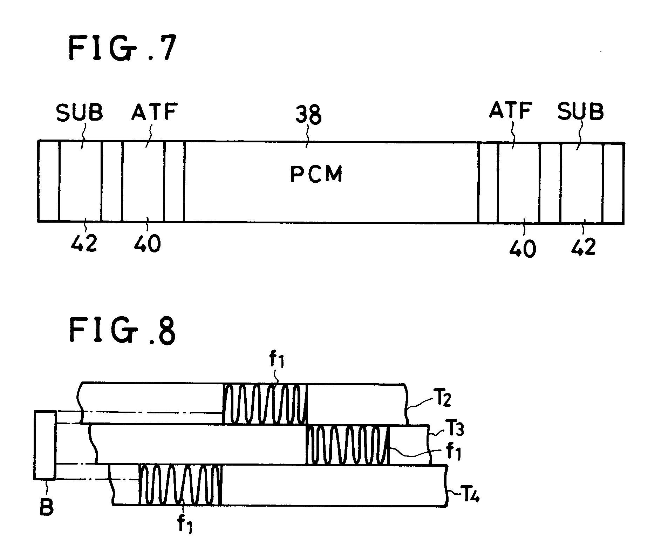

FIG. 7 is explanatory of the standard recording format of the R-DAT deck. Each records track is divided into a central PCM zone 38, a pair of auto track finding (ATF) zones 40 on both sides of the PCM zone, and a pair of subcode zones 42 on the outer sides of the ATF zones. The PCM zone 38 is for the recording of user data in the form of blocks with gaps. The ATF zones 40 are for the recording of tracking signals. The subcode zones 42 are for the recording of program numbers, time code, etc.

Reference may be had to FIG. 8 for a discussion of how the secondary head *B* and *B*′ are positioned in centerline alignment with desired overwritten tracks. Let us assume that the first secondary head *B* is to be positioned in centerline alignment with the track *T*₃. The first secondary head *B* must read the tracking signals *f*₁ recorded on the ATF zones 40 of the neighboring tracks *T*₂ and *T*₄. The tracking signals from the two neighboring tracks are compared with each other. The first secondary head *B* can be positioned in centerline alignment with the track *T*₃ as its position is controlled so as to zero the difference between the two tracking signals.

The recordings on the tracks *T*₂ and *T*₄ and that on the track *T*₃ have been formed by the primary heads *A* and *A*′ of opposite azimuths. The tracking signals *f*₁ can nevertheless be read from such adjoining tracks as their frequency is as low as, say, 130 kHz. The second secondary head *B*′ is positioned on any desired track in a like manner.

FIG. 9 is a detailed illustration of the read/write circuit 26. The primary heads *A* and *A*′ are individually connected to both a write amplifier circuit 44 and a read amplifier circuit 46. The secondary heads *B* and *B*′ are connected to an additional read amplifier circuit 48. We understand that the read amplifier circuit 46 comprises two amplifiers for amplifying the outputs from the two primary heads *A* and *A*′ and alternately produces the amplified outputs therefrom. The other read amplifier circuit 48 likewise comprises two amplifiers and alternately produces the amplified outputs from the two secondary heads *B* and *B*′.

The two read amplifier circuits 46 and 48 are both connected to a multiplexer 50. This multiplexer interleaves the outputs from both amplifier circuits 46 and 48 and produces a time-division multiplex signal during system operation in the write mode. In the read mode, on the other hand, the multiplexer 50 chooses the output from the read amplifier circuit 48.

The multiplexer 50 is connected to an equalizing amplifier 52 and thence to a wave-shaping circuit 54. The latter circuit 54 modifies the equalized signal into a binary digital signal.

The wave-shaping circuit 54 is connected directly to a first data separation circuit 56 on one hand and, on the other hand, to a second data separation circuit 58 via a gate circuit 60. The first data separation circuit 56 functions to separate the read data from the incoming signal, for delivery to a first data processing circuit 62, besides generating a timing clock signal based on the input signal. The first data processing circuit 62 performs various data processing functions in accordance with the R-DAT format, for the reading and writing of PCM data and subcode, for the correction of errors, etc.

The gate circuit 60 passes only those parts of the output from the wave-shaping circuit 54 which represents the outputs from the two secondary heads *B* and *B*′. The second data separation circuit 58 inputs both the output from the gate circuit 60 and the timing clock signal from the first data separation circuit 56, for deriving the servo data from the gate circuit output.

A second data processing circuit 64 processes the output from the second data separation circuit 58 in various ways such as, principally, demodulation, error detection and correction. This circuit 64 generates various error flags including a parity error flag and an incorrectability flag.

A sync control circuit 66 have inputs connected to both first and second data processing circuits 62 and 64, and an output connected to the second data processing circuit. The sync control circuit 66 causes operation of the second data processing circuit 64 with a phase delay equivalent to 90 degrees of rotation of the rotary drum 22 with respect to the first data processing circuit 62.

The first and second data processing circuits 62 and 64 are both connected via a selector 68 to a servo circuit 70 which controls both the drum motor 24 and a capstan motor 72. The gate circuit 60 and a tape feed control circuit 74 are also connected to the servo circuit 70. The tape feed control circuit 74 determines whether tape speed is to be controlled by ATF servo or to be maintained at a predetermined speed. The servo circuit 70 controls the speed and phase of rotation of the drum motor 24 and the speed of the capstan motor 72 in response to the outputs from the gate circuit 60, selector 68 and tape feed control circuit 74. Also, during operation in the ATF mode, the servo circuit 70 controls the capstan motor 76 for ATF tracking. Additional functions of the servo circuit 70 include the control of the driving of the cassette hubs and of the fast-forwarding of the tape.

Connected between the first data processing circuit 62 and the write amplifier circuit 44, a write gate control circuit 78 determines whether all or part of the write data put out by the first data processing circuit is to be recorded, and makes necessary control accordingly.

A gate circuit 80 is connected between the first data separation circuit 56 and the first data processing circuit 62 for the delivery of only the required data from the former to the latter. A data input/output circuit 82 controls the input and output of data to and from the first and second data processing circuit 62 and 64. A microcomputer 84 controls the first data processing circuit 62, servo circuit 70, and data input/output circuit 82.

In operation, the DAT cassette 12 needs formatting preparatory to the writing of PCM data thereon. The formatting mode does not require tracking control based on the outputs from the secondary heads *B* and *B*′. Such tracking control is effected only during the subsequent PCM writing mode. Also, in this PCM writing mode, the primary heads *A* and *A*′ are used for addressing the tracks on the tape 16. The multiplexer 50 produces a time division multiplex signal of the primary heads output signals representative of the data from the PCM zones 38 and subcode zones 42 of the tape tracks, and of the secondary head output signals representative of the data from the ATF zones 40.

The R-DAT deck 10 also performs the read-after-write monitoring of the data on the tape 16 in the PCM writing mode in accordance with our invention. As will be seen by referring again to FIG. 6, the read-after-write monitoring of our invention is such that the secondary heads *B* and *B*′ scan the tracks created by the primary heads *A* and *A*′ after one complete revolution of the rotary drum 22, instead of immediately scanning the tracks as in the prior art. Each track formed by the primary heads *A* and *A*′ has been overwritten by the following track after one complete revolution of the rotary drum 22. The secondary heads *B* and *B*′ scan such overwritten tracks. Accordingly, the secondary heads *B* and *B*′ read the data under the same conditions as the primary heads *A* and *A*′ read the data for its retrieval from the DAT cassette 12.

Another advantage of our invention is that the secondary heads *B* and *B*′ can accurately read the ATF servo data on the magnetic tape 16 for exact tracking control of the primary heads *A* and *A*′. This is because, first, the secondary heads are so arranged on the rotary drum 22 as to be in centerline alignment with the overwritten tracks and, second, the scanning width *W* of each secondary head is greater than the width of each overwritten track.

For the retrieval of the data from the DAT cassette 12, the outputs from the secondary heads *B* and *B*′ are derived by the read/write circuit 26. The data is recovered from the PCM zones 38 and subcode zones 42 of the tracks, with the necessary tracking control effected on the basis of the tracking data *f*₁ of FIG. 8.

A variety of modifications or alterations of the disclosure may be resorted to. For example, the secondary heads could be so arranged as to scan the tracks spaced any even number other than two from the tracks being created by the primary heads. It will also be apparent that the primary heads, instead of the secondary heads, could be used for the retrieval of information.

## Claims

1. A magnetic tape apparatus of the type having a rotary head assembly (20) for the storage and retrieval of digital data on and from a series of slanting record tracks (T) on magnetic tape (16) such as that in the form of a cassette, (12) the rotary head assembly comprising:
(a) a rotary drum (22) rotatable in a predetermined direction about a predetermined axis, with the magnetic tape partly wrapped around the rotary drum for traveling past the same;
(b) a first primary head (A) on the rotary drum for at least writing data on the magnetic tape;
(c) a second primary head (A') on the rotary drum for at least writing data on the magnetic tape, the first and second primary heads alternately scanning the magnetic tape for creating a series of slanting record tracks thereon, each primary head partly overwriting the preceding record track formed by the other primary head;
(d) a first secondary head (B) on the rotary drum for at least monitoring the data written on the magnetic tape by the first primary head, the first secondary head being displaced from the first primary head angularly on the rotary drum to such extents as to scan each record track that has been created by the first primary head; and
(e) a second secondary head (B') on the rotary drum for at least monitoring the data written on the magnetic tape by the second primary head, the second secondary head being displaced from the second primary head angularly on the rotary drum to such extents as to scan each record track that has been created by the second primary head;
characterised in that
(f) the first and second secondary heads are displaced both angularly and axially to such an extent so as to scan each record track written by a respective one of the first and second primary heads after it has been overwritten by the respective other one of the first and second primary heads;
(g) whereby the output signals of the first and second secondary heads can be utilized for evaluating the recording on the overwritten tracks.

2. The invention of claim 1 wherein the first secondary head scans each overwritten track spaced at least two tracks from the track being created by the first primary head, and wherein the second secondary head scans each overwritten track spaced at least two tracks from the track being created by the second primary head.

3. The invention of claim 1 wherein the first primary head and the first secondary head have the same azimuth, and wherein the second primary head and the second secondary head have each an azimuth opposite to the azimuth of the first primary head and the first secondary head.

4. The invention of claim 1 wherein the first and second primary heads are disposed in diametrically opposite positions and in the same axial position on the rotary drum, wherein the first and second secondary heads are disposed in diametrically opposite positions and in the same axial position on the rotary drum, and wherein the first and second primary heads are angularly spaced from about 88°50' to about 90°00' from the first and second secondary heads about the axis of the rotary drum.

5. The invention of claim 1 wherein the first and second secondary heads are so positioned on the rotary drum with respect to the first and second primary heads as to be in centerline alignment with the successive overwritten tracks on the magnetic tape.

6. The invention of claim 1 wherein the first and second secondary heads have a scanning width greater than the width of each overwritten record track on the magnetic tape.

7. The invention of claim 6 wherein the scanning width of the first and second secondary heads is the same as the scanning width of each of the first and second primary heads.

8. The invention of claim 7 wherein the scanning width of the first and second primary heads and the first and second secondary heads is not more than approximately twice the width of each overwritten track.

## Patentansprüche

1. Magnetband des Typs fit einer Drehkopfanordnung (20) zur Speicherung und Wiedergewinnung von Daten auf und von einer Reihe von schrägen Aufzeichnungsspuren (T) auf einem Magnetband (16) wie zum Beispiel in Form einer Kassette (12), wobei die Drehkopfanordnung besteht aus:
(a) einer Drehtrommel (22), die in einer bestimmten Richtung um eine bestimmte Achse drehbar ist, wobei das Magnetband teilweise um die Drehtrommel gewickelt ist, um über diese zu laufen;
(b) einem ersten Primärkopf (A) auf der Drehtrommel, um wenigstens davon auf das Magnetband zu schreiben;
(c) einem zweiten Primärkopf (A') auf der Drehtrommel, um wenigstens Daten auf das Magnetband zu schreiben, wobei der erste und zweite Primärkopf abwechselnd das Magnetband abtasten, um eine Reihe von schrägen Aufzeichnungsspuren darauf zu erzeugen, und jeder Primärkopf die vorherige Aufzeichnungsspur, die von dem anderen Primärkopf gebildet wird, teilweise überschreibt;
(d) einem ersten Sekundärkopf (B) auf der Drehtrommel, um wenigstens die auf das Magnetband vom ersten Primärkopf geschriebenen Daten zu kontrollieren, wobei der erste Sekundärkopf gegenüber dem ersten Primärkopf in einem solchen Ausmaß winkelig verstellt ist, daß er jede Aufzeichnungsspur abtastet, die vom ersten Primärkopf erzeugt wurde;
(e) einem zweiten Sekundärkopf (B') auf der Drehtrommel um wenigstens die vom zweiten Primärkopf auf das Magnetband des geschriebenen Daten zu kontrollieren, wobei der zweite Sekundärkopf gegenüber dem zweiten Primärkopf auf der Drehtrommel in einem solchen Ausmaß winkelig verstellt ist, daß er jede Aufzeichnungsspur abtastet, die von dem zweiten Primärkopf erzeugt wurde;
**dadurch gekennzeichnet daß**,
(f) der erste und zweite Sekundärkopf beide in einem solchen Ausmaß winkelig und axial verstellt sind, daß sie jede Aufzeichnungsspur abtasten, die jeweils vom ersten und zweiten Primärkopf geschrieben werden, nachdem sie von dem jeweils anderen ersten und zweiten Primärkopf überschrieben wurden;
(g) daß die Ausgangssignale auf dem ersten und zweiten Sekundärkopf durch Auswertung der Aufzeichung auf den überschriebenen Spuren genutzt werden können.

2. Erfindung nach Anspruch 1, bei der der erste Magnetkopf jede überschriebene Spur abtastet, die um wenigstens zwei Spuren von der Spur entfernt ist, die vom ersten Primärkopf erzeugt wird, und bei der der zweite Sekundärkopf jede überschriebene Spur abtastet, die um wenigstens zwei Spuren von der Spur entfernt ist, die von dem zweiten Primärkopf erzeugt wurde.

3. Erfindung nach Anspruch 1, bei der der erste Primärkopf und der erste Sekundärkopf den gleichen Azimut haben, und bei der der zweite Primärkopf und der zweite Sekundärkopf jeweils einen Azimut entgegen dem Azimut des ersten Primärkopfes und des ersten Sekundärkopfes haben.

4. Erfindung nach Anspruch 1, bei der der erste und zweite Primärkopf in diametral entgegengesetzen Lagen und in in der gleichen axialen Lage auf der Drehtrommel angeordnet sind, bei der der erste und zweite Sekundärkopf in diametral entgegengesetzten Lagen und in der gleichen axialen Lage auf der Drehtrommel angeordnet sind, und bei der der erste und zweite Primärkopf um etwa 88° 50 Minuten bis etwa 90° 00 Minuten vom ersten und zweiten Sekundärkopf um die Achse der Drehtrommel winkelig versetzt sind.

5. Erfindung nach Anspruch 1, bei der der erste und zweite Sekundärkopf derart auf der Drehtrommel bezüglich des ersten und zweiten Primärkopfes angeordnet sind, daß sie sich in Mittellinien-Fluchtung mit den aufeinander folgenden überschriebenen Spuren auf dem Magnetband befinden.

6. Erfindung nach Anspruch 1, bei der der erste und zweite Sekundärkopf eine Abtastbreite haben, die größer als die Breite jeder überschriebenen Aufzeichnungsspur auf dem Magnetband ist.

7. Erfindung nach Anspruch 6, bei der die Abtastbreite des ersten und zweiten Sekundärkopfes die gleiche wie die Abtastbreite jedes ersten und zweiten Primärkopfes ist.

8. Erfindung nach Anspruch 7, bei der die Abtastbreite des ersten und zweiten Primärkopfes und des ersten und zweiten Sekundärkopfes nicht mehr als etwa zwei Mal die Breite jeder überschriebenen Spur beträgt.

## Revendications

1. Appareil à bande magnétique du type comportant un ensemble tête rotative (20) pour la mémorisation et l'extraction de données numériques sur, et à partir d'une série de pistes d'enregistrement obliques (T) sur une bande magnétique (16) comme celles qui se présentent sous la forme d'une cassette (12), l'ensemble tête rotative comprenant :
(a) un tambour rotatif (22), mobile en rotation dans un sens prédéterminé autour d'un axe prédéterminé, la bande magnétique étant partiellement enroulée autour du tambour rotatif pour se déplacer devant celui-ci :
(b) une première tête primaire (A) sur le tambour rotatif pour au moins écrire des données sur la bande magnétique ;
(c) une seconde tête primaire (A') sur le tambour rotatif pour au moins écrire des données sur la bande magnétique, les première et seconde têtes primaires balayant de façon alternée la bande magnétique pour créer une série de pistes d'enregistrement obliques sur celle-ci, chaque tête primaire écrasant partiellement la piste d'enregistrement précédente formée par l'autre tête primaire ;
(d) une première tête secondaire (B) sur le tambour rotatif pour au moins contrôler les données écrites sur la bande magnétique par la première tête primaire, la première tête secondaire étant décalée par rapport à la première tête primaire, angulairement, sur le tambour rotatif d'une valeur telle qu'elle balaye chaque piste d'enregistrement qui a été créée par la première tête primaire ; et,
(e) une seconde tête secondaire (B') sur le tambour rotatif pour au moins contrôler les données écrites sur la bande magnétique par la seconde tête primaire, la seconde tête secondaire étant décalée par rapport à la seconde tête primaire, angulairement, sur le tambour rotatif d'une valeur telle qu'elle balaye chaque piste d'enregistrement qui a été créée par la seconde tête primaire ;
caractérisé en ce que :
(f) les première et seconde têtes secondaires sont toutes deux décalées angulairement et axialement d'une valeur telle qu'elles balayent chaque piste d'enregistrement écrite par l'une respective des première et seconde têtes primaires après qu'elle a été écrasée par l'autre tête respective des première et seconde têtes primaires ;
(g) ce par quoi les signaux de sortie des première et seconde têtes secondaires peuvent être utilisés pour évaluer l'enregistrement sur les pistes écrasées.

2. Invention selon la revendication 1, dans laquelle la première tête secondaire balayage chaque piste écrasée espacée d'au moins deux pistes de la piste qui a été créée par la première tête primaire, et dans laquelle la seconde tête secondaire balayage chaque piste écrasée espacée d'au moins deux pistes de la piste qui a été créée par la seconde tête primaire.

3. Invention selon la revendication 1, dans laquelle la première tête primaire et la première tête secondaire ont les mêmes azimuts, et dans laquelle la seconde tête primaire et la seconde tête secondaire ont chacune un azimut opposé à l'azimut de la première tête primaire et de la première tête secondaire.

4. Invention selon la revendication 1, dans laquelle les première et seconde têtes primaires sont disposées dans des positions diamétralement opposées et dans la même position axiale sur le tambour rotatif, dans laquelle les première et seconde têtes secondaires sont disposées dans des positions diamétralement opposées et dans la même position axiale sur le tambour rotatif, et dans laquelle les première et seconde têtes primaires sont angulairement espacées, autour de l'axe du tambour rotatif, d'environ 88° 50' à environ 90° 00' par rapport aux première et seconde têtes secondaires.

5. Invention selon la revendication 1, dans laquelle les première et seconde têtes secondaires sont placées sur le tambour rotatif par rapport aux première et seconde têtes primaires de manière à être en alignement axial avec les pistes écrasées successives sur la bande magnétique.

6. Invention selon la revendication 1, dans laquelle les première et seconde têtes secondaires ont une largeur de balayage plus grande que la largeur de chaque piste d'enregistrement écrasée sur la bande magnétique.

7. Invention selon la revendication 6, dans laquelle la largeur de balayage des première et seconde têtes secondaires est la même que la largeur de balayage de chacune des première et seconde têtes primaires.

8. Invention selon la revendication 7, dans laquelle la largeur de balayage des première et seconde têtes primaires et des première et seconde têtes secondaires n'est pas plus grande qu'environ deux fois la largeur de chaque piste écrasée.
